# EUROPÄISCHE PATENTSCHRIFT

(11) **EP 1 321 671 B1**
(45) Veröffentlichungstag und Bekanntmachung des Hinweises auf die Patenterteilung: **09.05.2012**
(21) Anmeldenummer: 02026383.6
(22) Anmeldetag: 25.11.2002
(51) Int. Cl.: F03D 1/00

(54) **Schwimmfähige Hubplattform zum Transport von Offshore-Windenergieanlagen**
Barge for the transport of offshore wind turbines
Barge de transport pour éoliennes marines

(30) Priorität: 18.12.2001 DE 10162225
(43) Veröffentlichungstag der Anmeldung: 25.06.2003
(73) Patentinhaber: PLAMBECK, Norbert, 27472 Cuxhaven (DE)
(72) Erfinder: PLAMBECK, Norbert, 27472 Cuxhaven (DE)
(74) Vertreter: Manitz, Finsterwald & Partner GbR

(56) Entgegenhaltungen:
- EP-A- 1 101 935
- WO-A-02/48547
- DE-U- 20 100 588
- GB-A- 1 594 535
- GB-A- 2 008 652
- US-A- 3 977 531
- JENSEN N M: "THE HORNS REV OFFSHORE PROJECT INSTALLATION AND TRANSPORTATION" EWEA SPECIAL TOPIC CONFERENCE ON OFFSHORE WIND ENERGY, XX, XX, 10. Dezember 2001 (2001-12-10), Seiten 1-4, XP001127019

## Beschreibung

Die Erfindung betrifft eine schwimmfähige Hubplattform zum Transport von vorzugsweise im wesentlichen komplett montierten Offshore-Windenergieanlagen mit mehreren vertikal verstellbaren Hubbeinen und auf der Plattform vorgesehenen Halteeinrichtungen für zumindest eine Windenergieanlage.

Offshore-Windenergieanlagen kommt zunehmend größere Bedeutung zu, da zum einen die über See herrschenden Windverhältnisse konstanter als an Land sind und zum anderen die häufig kritisierten landschaftlichen Beeinträchtigungen durch Windparks sowie die von derartigen Windparks ausgehenden Geräuschentwicklungen auf See keine Rolle spielen.

Zum Transport derartiger Windenergieanlagen zwischen Land und der jeweiligen Lokation auf See sind Transportmittel erforderlich, die nicht nur eine sichere Überführung der jeweiligen Windenergieanlagen gewährleisten, sondern möglichst auch mit Einrichtungen ausgestattet sein müssen, die das Be- und Entladen der jeweiligen Windenergieanlagen sowohl an Land als auch an den seeseitigen Aufnahmeplattformen ermöglichen.

Der Artikel "The Horns Rev Offshore Project Intsallation and Transportation" von Niels M Jensen, EWEA Conference on Offshore Wind Energy, 10. Dezember 2001, Seiten 1-4, offenbart eine schwimmfähige Hubplattform zum Transport von Offshore-Windenergieanlagen mit den Merkmalen des Oberbegriffs des Anspruchs 1 und mit einem großen Kran zum Anheben und Absenken von Komponenten einer Windenergieanlage.

EP 1 101 935 A2 offenbart ebenfalls eine schwimmfähige Hubplattform zum Transport von Offshore-Windenergieanlagen, die einen Derrickkran oder einer vergleichbaren Hubvorrichtung mit einem Stahlträger und einem Flaschenzug aufweist, mittels derer die Windenergieanlage zur Überführung zu einem Einsatzort auf See angehoben und abgesenkt werden kann.

Aus der Gebrauchsmusterschrift 200 10 086 ist es bereits bekannt, komplette Offshore-Windenergieanlagen mittels eines speziell ausgebildeten Schwimmkrans an den seeseitigen Aufstellungsort zu transportieren. Diese Lösung ist jedoch aufgrund der erforderlichen Sonderkonstruktionen sehr aufwändig und setzt voraus, dass die Krananlage so ausgebildet ist, dass die ein hohes Gewicht aufweisende Offshore-Windenergieanlage durch Heb- und Schwenkvorgänge in der erforderlichen Weise umgesetzt werden kann. Da eine derartige aufwändige Krananlage jeweils nur vergleichsweise kurzzeitig im Einsatz ist und hohe, durch die Transportwege bedingte Totzeiten in Kauf genommen werden müssen, erweist sich diese bekannte Methode als ausgesprochen unwirtschaftlich.

Aufgabe der Erfindung ist es daher, eine schwimmfähige Hubplattform der eingangs angegebenen Art so auszugestalten, dass unter Gewährleistung eines sicheren Transports die jeweils zu transportierenden Windenergieanlagen mit möglichst einfachen Mitteln auf die Hubplattform überführt und von der Hubplattform wieder entladen werden können.

Gemäß der Erfindung wird diese Aufgabe ausgehend von der im Oberbegriff des Patentanspruchs 1 angegebenen schwimmfähigen Hubplattform dadurch gelöst, dass die Halteeinrichtungen gleichzeitig zur horizontalen, zumindest im wesentlichen anhebefreien Überführung einer Windenergieanlage von einem landseitigen oder seeseitigen Fundament auf die Hubplattform und von der Hubplattform auf ein land- oder seeseitiges Fundament ausgebildet sind, wobei die von Basisträger, Vertikalträger und Justierstempel gebildete Halte- und Überführungseinrichtung mittels einer plattformfesten Schubeinheit horizontal verfahrbar ist und wobei an dem Vertikalträger zur Verbindung mit dem Turm einer Windenergieanlage bestimmte Aufnahmevorrichtungen angebracht sind.

Weiterer Gegenstand der Erfindung ist ein Verfahren zum Transport von Offshore-Windenergieanlagen mit den Merkmalen des Anspruchs 12.

Vorzugsweise besteht jede Halte- und Überführungseinrichtung aus zumindest einem im wesentlichen horizontal verlaufenden Basisträger, wenigstens einem am Basisträger gelenkig angelenkten Vertikalträger und zumindest einem schräg zwischen Basisträger und Vertikalträger verlaufenden Führungs- und Justierstempel.
Am Vertikalträger sind Aufnahmevorrichtungen für die jeweils zu erfassende Windenergieanlage vorgesehen, wobei gemäß einer besonderen Ausführungsform der Erfindung diese Aufnahmevorrichtungen formmäßig zumindest teilweise komplementär zur Windenergieanlage ausgebildet sind, so dass Turm, Maschinengehäuse und auch Flügel zumindest bereichsweise in dieser Aufnahme passend aufgenommen und damit auch flächig und sicher abgestützt sind.

Von besonderem Vorteil ist des weiteren, dass die Überführung der Windenergieanlagen von Land auf die Plattform und von der Plattform auf das jeweilige seeseitige Aufnahmefundament oder auch wieder zurück an Land kranlos erfolgen kann, da die Überführungsvorgänge praktisch ausschließlich in Form von horizontalen Schiebevorgängen realisierbar sind. Die Halte- und Überführungseinrichtung ermöglicht zwar auch beschränkte Anhebevorgänge, aber diese dienen dann nur zur Durchführung von Justier- und Positionierarbeiten.

Eine weitere vorteilhafte Ausführungsform zeichnet sich durch eine gesteuerte Verringerung der Länge des Führungs- und Justierstempels aus, die dazu führt, dass der Vertikalträger mit der daran über Aufnahmevorrichtungen befestigten Windenergieanlage in Richtung der Hubplattform gekippt werden kann und dann die Windenergieanlage im wesentlichen liegend auf der Hubplattform transportierbar ist, so dass die Gesamtanordnung dann einen vorteilhaft tiefen Transport-Schwerpunkt besitzt. Die Hubplattform kann mit einem Eigenantrieb ausgestattet sein, jedoch auch in Form einer Schleppeinheit ausgebildet und verwendet werden.

Während die Windenergieanlage bereits an Land auf einwandfreien Betrieb getestet werden kann, ermöglicht die unkomplizierte Errichtung der stehend oder liegend transportierbaren Gesamtanlage auf dem seeseitigen Arbeitsfundament eine schnelle Inbetriebnahme. Dies bedeutet, dass die Windenergieanlage, die auch schon an Land in Betrieb genommen werden kann, nur kurzzeitig während des Seetransports außer Betrieb sein muss, wobei es prinzipiell sogar möglich ist, die Anlage auch in aufrechter Position auf der Hubplattform zu betreiben.

Von besonderer Bedeutung ist ferner, dass aufgrund des durch die Erfindung bereitgestellten einfachen und schnellen Transportsystems defekte Windenergieanlagen eines Offshore-Windparks wirtschaftlich auch dann noch zur Reparatur an Land gebracht werden können, wenn eine Reparatur auf See technisch im Prinzip zwar möglich, aufgrund von nicht vorhersehbaren Schlechtwetterphasen aber zeitaufwändig und teuer werden kann.

Weitere vorteilhafte Merkmale und Ausgestaltungen der Erfindung sind in den Unteransprüchen angegeben.

Ausführungsbeispiele der Erfindung werden unter Bezugnahme auf die Zeichnung erläutert. In der Zeichnung zeigt:
- Fig. 1: eine schematische Darstellung einer ersten Ausführungsform einer schwimmfähigen Hubplattform nach der Erfindung bei Übernahme einer Offshore-Windenergieanlage von einem landseitigen Fundament,
- Fig. 2: eine schematische Darstellung einer zweiten Ausführungsform der erfindungsgemäßen Hubplattform zu Beginn eines Kippvorgangs, und
- Fig. 3: eine der Fig. 2 entsprechende Darstellung, bei der der Kippvorgang bereits beendet ist.

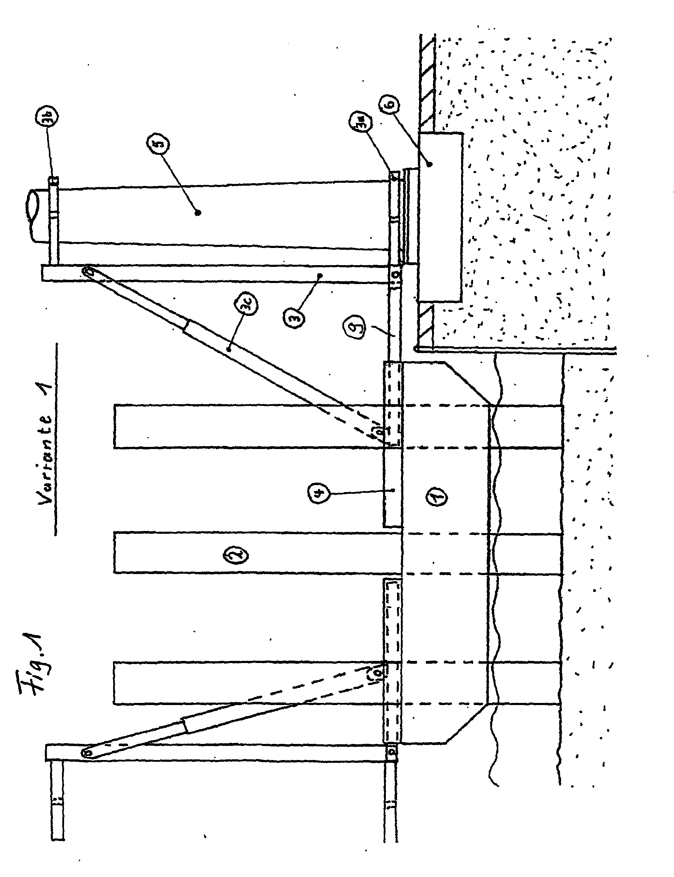

Fig. 1 zeigt eine schwimmfähig ausgebildete Hubplattform 1 mit einer Mehrzahl von Hubbeinen 2, mittels derer das Niveau der Hubplattform entsprechend den jeweiligen Bedürfnissen vorgebbar ist.

Auf der Hubplattform 1 sind in dem dargestellten Ausführungsbeispiel zwei Halte- und Überführungseinrichtungen vorgesehen, die jeweils zur Aufnahme einer Windenergieanlage bestimmt sind. Jede dieser Halte- und Überführungseinrichtungen besteht aus zumindest einem Basisträger 9, einem Vertikalträger 3 sowie wenigstens einem längenverstellbaren Führungs- und Justierstempel 3c. Am Vertikalträger 3 sind zumindest zwei insbesondere höhenverstellbar angebrachte Aufnahmevorrichtungen 3a, 3b vorgesehen, die den Mast der Windenergieanlage 5 verriegelnd umgreifen können.

Der Turm 5 der Windenergieanlage ist auf einem landseitigen Montageund Testfundament 6 angebracht und kann nach Lösen von diesem Fundament 6 mittels der Halte- und Überführungseinrichtung durch einen im wesentlichen horizontal verlaufenden Schiebevorgang auf die Plattform 1 überführt werden. Dazu ist die Halte- und Überführungseinrichtung mit einer plattformfesten Schubeinheit 4 ausgestattet.
Auf der Plattform 1 kann für jede übernommene Windenergieanlage 5 ein Fundament vorgesehen sein, mit dem der entsprechende Flansch des Mastes kraft- und gegebenenfalls auch formschlüssig verbunden werden kann, so dass neben einer stabilen Befestigung auch eine einwandfreie Kippsicherung gewährleistet ist.

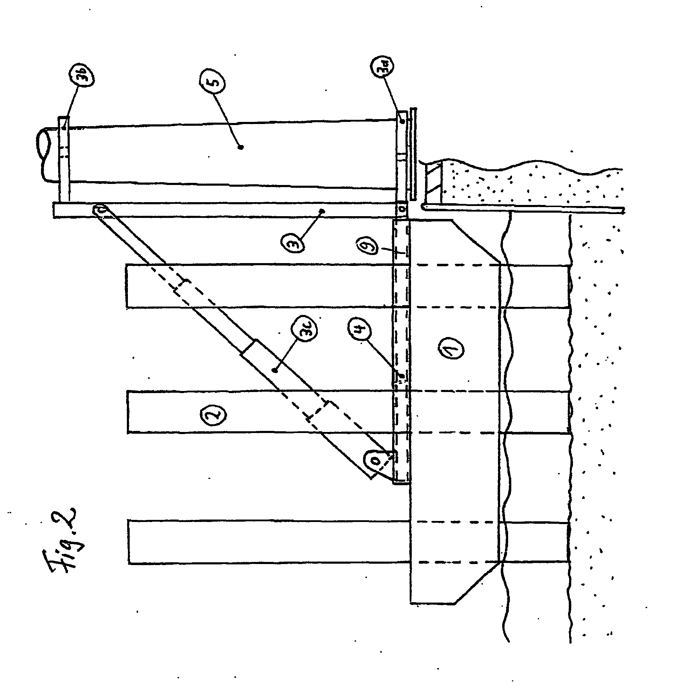

Fig. 2 zeigt eine Ausführungsvariante, die insbesondere so ausgestaltet ist, dass die jeweils übernommene Windenergieanlage 5 liegend, d.h. mit tiefem Schwerpunkt transportiert werden kann. Dazu ist der Führungsund Justierstempel 3c mehrteilig ausgebildet, so dass durch ein teleskopisches Zusammenfahren seine Gesamtlänge auf ein Minimum verringert werden kann.

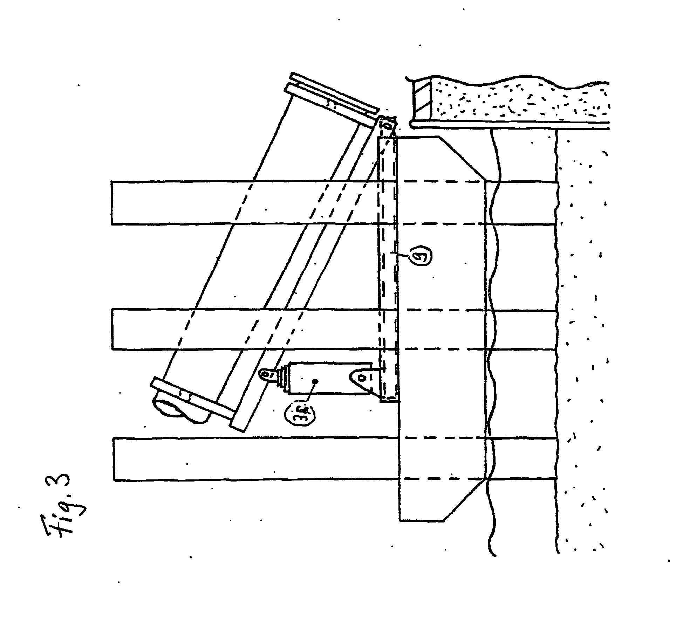

Wie die Fig. 3 zeigt, wird durch ein Zusammenfahren des teleskopisch ausgebildeten Führungs- und Justierstempels 3c auf dessen Minimallänge eine in den Aufnahmevorrichtungen 3a, 3b gehalterte Windenergieanlage von einer aufrechten landseitigen Position in eine im wesentlichen liegende Position überführt, wobei zweckmäßigerweise vor Beginn der entsprechenden Kippbewegung der horizontale Basisträger 9 voll eingefahren wird.

In der in Fig. 3 gezeigten Position kann die Windenergieanlage über See transportiert und nach Erreichen des Aufstellortes wieder in die senkrechte Position überführt und dann durch Horizontalverschiebung auf einem seeseitigen Fundament abgesetzt und dort wieder befestigt werden.

Durch diese Ausführungsbeispiele wird verdeutlicht, dass mit vergleichsweise einfachen Mitteln ohne das Erfordernis von aufwändigen Kränen Windenergieanlagen sicher transportiert und vor allem auch übernommen und übergeben werden können.

Mittels der erfindungsgemäßen Hubplattform können nicht nur neue Windenergieanlagen seeseitig problemlos errichtet werden, sondern diese Hubplattform ermöglicht auch eine schnelle Auswechslung eventuell defekter Anlagen, so dass äußerst geringe Stillstandszeiten in Windparkanlagen sichergestellt werden können.

### Bezugszeichenliste

- 1: Hubplattform
- 2: Hubbein
- 3: Vertikalträger
- 3a, 3b: Aufnahmevorrichtungen
- 3c: Führungs- und Justierstempel
- 4: Schubeinheit
- 5: Windenergieanlage
- 6: landseitiges Montage- und Testfundament
- 9: Basisträger

## Patentansprüche

1. Schwimmfähige Hubplattform zum Transport von Offshore-Windenergieanlagen mit mehreren vertikal verstellbaren Hubbeinen und auf der Plattform vorgesehenen Halteeinrichtungen für zumindest eine Windenergieanlage,
**dadurch gekennzeichnet,**
**dass** die Halteeinrichtungen gleichzeitig zur horizontalen, zumindest im wesentlichen anhebefreien Überführung einer Windenergieanlage (5) von einem landseitigen oder seeseitigen Fundament auf die Hubplattform (1) und von der Hubplattform (1) auf ein land- oder seeseitiges Fundament ausgebildet sind, wobei die von Basisträger (9), Vertikalträger (3) und Justierstempel (3c) gebildete Halte- und Überführungseinrichtung mittels einer plattformfesten Schubeinheit (4) horizontal verfahrbar ist und wobei an dem Vertikalträger (3) zur Verbindung mit dem Turm einer Windenergieanlage (5) bestimmte Aufnahmevorrichtungen (3a, 3b) angebracht sind.

2. Hubplattform nach Anspruch 1,
**dadurch gekennzeichnet,**
**dass** jede Halte- und Überführungseinrichtung aus zumindest einem im wesentlichen horizontal verlaufenden Basisträger (9), wenigstens einem am Basisträger (9) gelenkig angelenkten Vertikalträger (3) und zumindest einem schräg zwischen Basisträger (9) und Vertikalträger (3) verlaufenden Führungs- und Justierstempel (3c) besteht.

3. Hubplattform nach Anspruch 1 oder 2,
**dadurch gekennzeichnet,**
**dass** die Aufnahmevorrichtungen (3a, 3b) höhenverstellbar an dem Vertikalträger (3) angebracht sind.

4. Hubplattform nach einem der vorhergehenden Ansprüche,
**dadurch gekennzeichnet,**
**dass** die Aufnahmevorrichtungen (3a, 3b) den Turm verriegelnd umschließen.

5. Hubplattform nach einem der vorhergehenden Ansprüche,
**dadurch gekennzeichnet,**
**dass** eine Windenergieanlage oder mehrere Windenergieanlagen (5) mittels jeweils einer Halte- und Überführungseinrichtung in aufrechter Position auf der Hubplattform (1) transportfest fixierbar ist bzw. sind.

6. Hubplattform nach Anspruch 5,
**dadurch gekennzeichnet,**
**dass** jede Windenergieanlage (5) auf der Hubplattform (1) mit einem Transportfundament kuppel- und/oder verschraubbar ist.

7. Hubplattform nach Anspruch 6,
**dadurch gekennzeichnet,**
**dass** zwischen einem Transportfundament und einem Basisflansch einer Windenergieanlage eine blockierbare Schiebeführung vorgesehen ist.

8. Hubplattform nach einem der vorhergehenden Ansprüche,
**dadurch gekennzeichnet,**
**dass** durch eine gesteuerte Verringerung der Länge des Führungs- und Justierstempels (3c) der Vertikalträger (3) der Halte- und Führungseinrichtung mit der daran über die Aufnahmevorrichtungen (3a, 3b) befestigten Windenergieanlage in Richtung der Hubplattform (1) kippbar und damit die Windenergieanlage (5) im wesentlichen liegend auf der Hubplattform (1) transportierbar ist.

9. Hubplattform nach einem der vorhergehenden Ansprüche,
**dadurch gekennzeichnet,**
**dass** die Hubplattform eine Mehrzahl von vertikal verstellbaren Hubbeinen (2) aufweist, über die in der Übernahme- oder Übergabeposition für die jeweilige Offshore-Windenergieanlage (5) die Höhenposition des horizontal verfahrbaren Basisträgers (9) der Höhenposition des Befestigungsbereichs für die untere Aufnahmevorrichtung (3) am Turm der Windenergieanlage (5) anpassbar ist.

10. Hubplattform nach einem der vorhergehenden Ansprüche,
**dadurch gekennzeichnet,**
**dass** die Hubplattform (1) zur Aufnahme von Ballastwasser zu Ballastierungs- und/oder Trimmzwecken ausgebildet ist.

11. Hubplattform nach einem der vorhergehenden Ansprüche,
**dadurch gekennzeichnet,**
**dass** die mit dem Vertikalträger verbundene Aufnahmevorrichtung für die Windenergieanlage als zumindest zum Teil komplementär zur Windenergieanlage geformte Aufnahmevorrichtung ausgebildet ist.

12. Verfahren zum Transport von Offshore-Windenergieanlagen unter Verwendung einer schwimmfähigen Hubplattform (1) mit mehreren vertikal verstellbaren Hubbeinen (2) und auf der Hubplattform (1) für zumindest eine Windenergieanlage (5) vorgesehenen Halte- und Überführungseinrichtungen, die von Basisträger (9), Vertikalträger (3) und Justierstempel (3c) gebildet sind, bei dem
- die Windenergieanlage (5) horizontal, im Wesentlichen anhebefrei von einem landseitigen oder seeseitigen Fundament auf die Hubplattform (1) und/oder von der Hubplattform (1) auf ein land- oder seeseitiges Fundament überführt und auf der Hubplattform (1) transportiert wird,
und welches die Schritte umfasst:
- Verbinden des Turms der Windenergieanlage (5) mit an dem Vertikalträger (3) angebrachten Aufnahmevorrichtungen (3a, 3b); und
- horizontales Verfahren der Halte- und Überführungseinrichtung mittels einer plattformfesten Schubeinheit (4) der Hubplattform (1).

13. Verfahren nach Anspruch 12,
**dadurch gekennzeichnet,**
**dass** das Niveau der Hubplattform (1) durch vertikales Verstellen der Hubbeine (2) angepasst wird.

## Claims

1. A floating lifting platform for the transport of offshore wind turbines having a plurality of vertically adjustable lifting legs and holding devices provided on the platform for at least one wind turbine,
**characterised in that**
the holding devices are simultaneously designed for the horizontal transfer, at least substantially without lifting, of a wind turbine (5) from a shore-based or offshore foundation onto the lifting platform (1) and from the lifting platform (1) onto a shore-based or offshore foundation, wherein the holding and transfer device formed by a base support (9), a vertical support (3) and an adjustment prop (3c) can be moved horizontally by means of a shift unit (4) fixed to the platform, and wherein reception apparatus (3a, 3b) intended for connection to the tower of a wind turbine (5) are attached to the vertical support (3).

2. A lifting platform in accordance with claim 1,
**characterised in that**
each holding and transfer device comprises at least one substantially horizontally extending base support (9), at least one vertical support (3) pivotally connected to the base support (9) and at least one guidance and adjustment prop (3c) extending obliquely between the base support (9) and the vertical support (3).

3. A lifting platform in accordance with claim 1 or claim 2,
**characterised in that**
the reception apparatus (3a, 3b) are attached vertically adjustably to the vertical support (3).

4. A lifting platform in accordance with any one of the preceding claims,
**characterised in that**
the reception apparatus (3a, 3b) latchingly surround the tower.

5. A lifting platform in accordance with any one of the preceding claims,
**characterised in that**
a wind turbine or a plurality of wind turbines (5) is or are fixed in a fixed-transport position in an upright position on the lifting platform (1) by means of a respective holding and transfer device.

6. A lifting platform in accordance with claim 5,
**characterised in that**
each wind turbine (5) can be coupled and/or screwed to the lifting platform (1) by a transport foundation.

7. A lifting platform in accordance with claim 6,
**characterised in that**
a blockable sliding guide is provided between a transport foundation and a base flange of a wind turbine.

8. A lifting platform in accordance with any one of the preceding claims,
**characterised in that**
the vertical support (3) of the holding and guidance device with the wind turbine fastened thereto via the reception apparatus (3a, 3b) can be tilted by a controlled reduction of the length of the guidance and adjustment prop (3c) and the wind turbine (5) can be transported substantially lying on the lifting platform (1).

9. A lifting platform in accordance with any one of the preceding claims,
**characterised in that**
the lifting platform has a plurality of vertically adjustable lifting legs (2) via which the vertical position of the horizontally movable base support (9) can be matched to the vertical position of the fastening region for the lower reception apparatus (3) at the tower of the wind turbine (5) in the takeover or transfer position for the respective offshore wind turbine (5).

10. A lifting platform in accordance with any one of the preceding claims,
**characterised in that**
the lifting platform (1) is designed for receiving ballast water for ballasting and/or trimming purposes.

11. A lifting platform in accordance with any one of the preceding claims,
**characterised in that**
the reception apparatus for the wind turbine connected to the vertical support is designed as a reception apparatus shaped at least partly complementary to the wind turbine.

12. A method for the transport of offshore wind turbines using a floatable lifting platform (1) having a plurality of vertically adjustable lifting legs (2) and holding and transfer devices which are provided for at least one wind turbine (5) on the lifting platform (1) and which are formed by a base support (9), a vertical support (3) and an adjustment prop (3c), wherein
- the wind turbine (5) is transferred horizontally, substantially without lifting, from a shore-based or offshore foundation onto the lifting platform (1) and/or from the lifting platform (1) onto a shore-based or offshore foundation and is transported on the lifting platform (1),
and which includes the steps:
- connecting the tower of the wind turbine (5) to reception apparatus (3a, 3b) attached to the vertical support (3); and
- horizontal movement of the holding and transfer device by means of a shift unit (4) of the lifting platform (1) fixed to the platform.

13. A method in accordance with claim 12,
**characterised in that**
the level of the lifting platform (1) is adapted by vertical adjustment of the lifting legs (2).

## Revendications

1. Plate-forme de levage flottante pour le transport d'installations éoliennes offshore, comprenant plusieurs pieds de levage déplaçables verticalement et des dispositifs de maintien prévus sur la plate-forme pour au moins une installation éolienne,
**caractérisée en ce que**
les dispositifs de maintien sont simultanément réalisés pour le transfert horizontal et au moins sensiblement sans levage d'une installation éolienne (5) depuis une fondation à terre ou en mer vers la plate-forme de levage (1) et depuis la plate-forme de levage (1) vers la fondation à terre ou en mer, dans laquelle le système de maintien et de transfert formé par des supports de base (9), des supports verticaux (3) et un étançon d'ajustement (3c) est déplaçable horizontalement au moyen d'une unité poussoir (4) solidaire de la plate-forme, et des dispositifs de réception (3a, 3b) destinés à liaison avec la tour d'une installation éolienne (5) sont montés sur le support vertical (3).

2. Plate-forme de levage selon la revendication 1,
**caractérisée en ce que** chaque système de maintien et de transfert est composé d'au moins un support de base (9) s'étendant sensiblement horizontalement, d'au moins un support vertical (3) attaché de manière articulée sur le support de base (9) et d'au moins un étançon de guidage et d'ajustement (3c) s'étendant en oblique entre le support de base (9) et le support vertical (3).

3. Plate-forme de levage selon la revendication 1 ou 2,
**caractérisée en ce que** les dispositifs de réception (3a, 3b) sont montés avec possibilité de réglage en hauteur sur le support vertical (3).

4. Plate-forme de levage selon l'une des revendications précédentes,
**caractérisée en ce que** les dispositifs de réception (3a, 3b) enserrent la tour en la verrouillant.

5. Plate-forme de levage selon l'une des revendications précédentes,
**caractérisée en ce qu'**une ou plusieurs installations éoliennes (5) est/sont susceptibles d'être fixées en position dressée sur la plate-forme de levage (1) et fermement en vue d'un transport, au moyen d'un système de maintien et de transfert respectif.

6. Plate-forme de levage selon la revendication 5,
**caractérisée en ce que** chaque installation éolienne (5) est susceptible d'être accouplée et/ou vissée à une fondation de transport sur la plate-forme de levage (1).

7. Plate-forme de levage selon la revendication 6,
**caractérisée en ce qu'**un guidage coulissant susceptible d'être bloqué est prévu entre une fondation de transport et une bride de base d'une installation éolienne.

8. Plate-forme de levage selon l'une des revendications précédentes,
**caractérisée en ce que** par une réduction ciblée de la longueur de l'étançon de guidage et d'ajustement (3c), le support vertical (3) du système de maintien et de guidage, avec l'installation éolienne fixée sur celui-ci via les dispositifs de réception (3a, 3b), est susceptible de basculer en direction de la plate-forme de levage (1), et ainsi l'installation éolienne (5) est susceptible d'être transportée sensiblement couchée sur la plate-forme de levage (1).

9. Plate-forme de levage selon l'une des revendications précédentes,
**caractérisée en ce que** la plate-forme de levage comprend une pluralité de pieds de levage (2) déplaçables verticalement, au moyen desquels, dans la position de reprise ou de transfert pour l'installation éolienne offshore respective (5), la position en hauteur du support de base (9) déplaçable horizontalement peut être ajustée à la position en hauteur de la zone de fixation pour le dispositif de réception inférieur (3) sur la tour de l'installation éolienne (5).

10. Plate-forme de levage selon l'une des revendications précédentes,
**caractérisée en ce que** la plate-forme de levage (1) est réalisée pour la réception d'eau de ballast à des fins d'équilibrage et/ou de correction d'assiette.

11. Plate-forme de levage selon l'une des revendications précédentes,
**caractérisée en ce que** le dispositif de réception, relié au support vertical, pour l'installation éolienne, est réalisé comme un dispositif de réception conformé au moins en partie de manière complémentaire à l'installation éolienne.

12. Procédé pour le transport d'installations éoliennes offshore en utilisant une plate-forme de levage flottante (1) avec plusieurs pieds de levage déplaçables verticalement (2) et avec des systèmes de maintien et de transfert prévus sur la plate-forme de levage (1) pour au moins une installation éolienne (5), lesdits systèmes étant formés de supports de base (9), de supports verticaux (3), et d'étançons d'ajustement (3c), dans lequel
- l'installation éolienne (5) est transférée horizontalement et sensiblement sans être levée depuis une fondation à terre ou en mer vers la plate-forme de levage (1) et/ou depuis la plate-forme de levage (1) vers une fondation à terre ou en mer, et est transportée sur la plate-forme de levage (1), le procédé comprenant les étapes suivantes :
- liaison de la tour de l'installation éolienne (5) avec des dispositifs de réception (3a, 3b) montés sur le support vertical (3) ; et
- déplacement horizontal du système de maintien et de transfert au moyen d'une unité poussoir (4) de la plate-forme de levage (1), solidaire de la plate-forme.

13. Procédé selon la revendication 12,
**caractérisé en ce que** le niveau de la plate-forme de levage (1) et ajusté par déplacement vertical des pieds de levage (2).
